# EUROPEAN PATENT APPLICATION

(11) **EP 4 647 283 A1**
(43) Date of publication of application: **12.11.2025**
(21) Application number: 23841050.0
(22) Date of filing: 14.12.2023
(51) Int. Cl.: B60K 35/00, B62J 27/00

(54) **CONTROL DEVICE AND CONTROL METHOD**

(30) Priority: 05.01.2023 JP 2023000735
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/062676
(87) International publication number: WO 2024/147051

(57) **Abstract**

The present invention provides a control apparatus and a control method capable of properly supporting driving of a straddle-type vehicle by a rider.

In a control apparatus (17) and a control method according to the present invention, an execution section of the control apparatus (17) executes a rider support operation for supporting driving of a straddle-type vehicle (1) by a rider (2), and executes a first support operation which is the rider support operation for supporting driving by the rider (2) by display on a display unit (21, 31).

## Description

### Technical Field

The present disclosure relates to a control apparatus and a control method capable of properly supporting driving of a straddle-type vehicle by a rider.

### Background Art

Conventionally, various techniques of supporting driving of a straddle-type vehicle such as a motorcycle by a rider have been proposed. For example, Patent Literature 1 discloses a driver support system for warning a rider on a motorcycle about improper approaching to an obstacle present in a traveling direction or substantially in the traveling direction based on information detected by a sensor apparatus that detects the obstacle.

### Citation List

### Patent Literature

PTL 1: JP2009-116882A

### Summary of Invention

### Technical Problem

A rider support operation for supporting driving by a rider includes an operation of providing information to the rider. A straddle-type vehicle includes no vehicle interior, and for this reason, it is difficult to provide information via sound or vibration as compared to, e.g., a four-wheeled motor vehicle. For this reason, there is a high need to support driving of the straddle-type vehicle by the rider by properly providing the information to the rider.

The present invention has been made in view of the above-described problems, and provides a control apparatus and a control method capable of properly supporting driving of a straddle-type vehicle by a rider.

### Solution to Problem

The control apparatus according to the present invention is a control apparatus for a rider support system for supporting driving of a straddle-type vehicle by a rider. The control apparatus includes an execution section that executes a rider support operation for supporting driving by the rider. The execution section executes a first support operation which is the rider support operation for supporting driving by the rider by display on a display unit.

The control method according to the present invention is a control method for a rider support system for supporting driving of a straddle-type vehicle by a rider. The control method includes an execution section of a control apparatus executing a rider support operation for supporting driving by the rider. The execution section executes a first support operation which is the rider support operation for supporting driving by the rider by display on a display unit.

### Advantageous Effects of Invention

In the control apparatus and the control method according to the present invention, the execution section of the control apparatus executes the rider support operation for supporting driving of the straddle-type vehicle by the rider, and executes the first support operation which is the rider support operation for supporting driving by the rider by display on the display unit. With this configuration, information can be properly provided to the rider. Thus, driving of the straddle-type vehicle by the rider can be properly supported.

### Brief Description of Drawings

Fig. 1 is a schematic view showing an outline configuration of a straddle-type vehicle according to an embodiment of the present invention.
Fig. 2 is a block diagram showing one example of a functional configuration of a control apparatus according to the embodiment of the present invention.
Fig. 3 is a flowchart showing one example of the flow of first processing performed by the control apparatus according to the embodiment of the present invention.
Fig. 4 is a view showing a state in which a group including the straddle-type vehicle according to the embodiment of the present invention is in the middle of group ride.
Fig. 5 is a view showing one example of an augmented reality object displayed within the field of view of a rider in the first processing according to the embodiment of the present invention.
Fig. 6 is a view showing one example of the augmented reality object displayed within the field of view of the rider in the first processing according to the embodiment of the present invention.
Fig. 7 is a view showing one example of the augmented reality object displayed within the field of view of the rider in the first processing according to the embodiment of the present invention.
Fig. 8 is a view showing one example of the augmented reality object displayed within the field of view of the rider in the first processing according to the embodiment of the present invention.
Fig. 9 is a view showing one example of the augmented reality object displayed within the field of view of the rider in the first processing according to the embodiment of the present invention.
Fig. 10 is a view showing one example of the augmented reality object displayed within the field of view of the rider in the first processing according to the embodiment of the present invention.
Fig. 11 is a flowchart showing one example of the flow of second processing performed by the control apparatus according to the embodiment of the present invention.
Fig. 12 is a flowchart showing one example of the flow of third processing performed by the control apparatus according to the embodiment of the present invention.
Fig. 13 is a flowchart showing one example of the flow of fourth processing performed by the control apparatus according to the embodiment of the present invention. Description of Embodiments

Hereinafter, a control apparatus and a control method according to the present invention will be described with reference to the drawings.

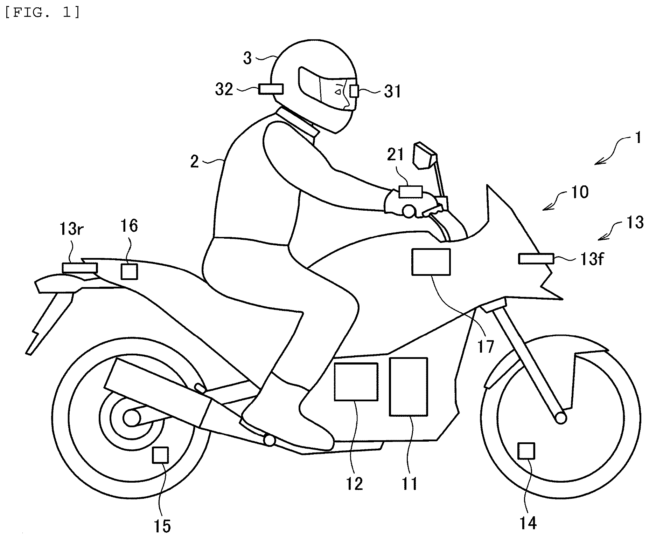

Note that a control apparatus used for a two-wheeled motorcycle will be described hereinafter (see a straddle-type vehicle 1 in Fig. 1), but a vehicle targeted for control by the control apparatus according to the present invention may be a straddle-type vehicle other than the two-wheeled motorcycle. The straddle-type vehicle means a vehicle on which a rider straddles. The straddle-type vehicle includes a motorcycle (motorbike, motor tricycle), a bicycle, etc. The motorcycle includes a vehicle using an engine as a power source, a vehicle using an electric motor as a power source, etc. The motorcycle includes a bike, a scooter, an electric scooter, etc. The bicycle means a vehicle which can be driven on a road with pedal effort which is applied to a pedal by a rider. The bicycle includes a regular bicycle, a power-assisted bicycle, an electric bicycle, etc.

Hereinafter, a case where an engine (specifically, engine 11 in Fig. 1 as described later) is mounted as a drive source capable of outputting power for driving a drive wheel (specifically, rear wheel in Fig. 1) will be described, but a drive source (e.g., electric motor) other than the engine may be mounted as the drive source and a plurality of drive sources may be mounted.

Further, a case where a control unit (specifically, hydraulic pressure control unit 12 in Fig. 1 as described later) that controls a brake hydraulic pressure is employed as a control unit for braking force generated on a wheel will be described hereinafter, but a control unit (so-called brake by wire) that controls the position of a wheel braking unit itself by an electric signal may be employed as the control unit for the braking force generated on the wheel.

Configurations, operations, etc. described below are one example, and the control apparatus and the control method according to the present invention are not limited to these configurations, operations, etc.

The same or similar description will be summarized or omitted hereinafter as necessary. Further, in each figure, the same or similar members or portions are assigned with no reference numerals, or are assigned with the same reference numerals. In addition, detailed structures are simplified or omitted in each figure as necessary.

### <Configuration of Straddle-Type Vehicle>

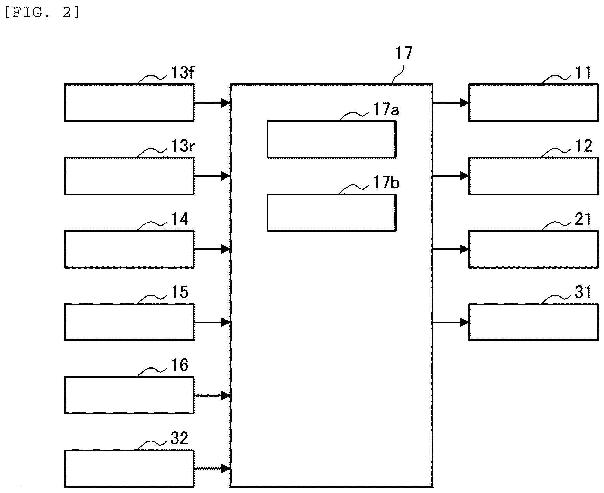

The configuration of the straddle-type vehicle 1 according to the embodiment of the present invention will be described with reference to Figs. 1 and 2.

Fig. 1 is a schematic view showing an outline configuration of the straddle-type vehicle 1. The straddle-type vehicle 1 is a two-wheeled motorcycle equivalent to one example of the straddle-type vehicle according to the present invention. As shown in Fig. 1, the straddle-type vehicle 1 includes the engine 11, the hydraulic pressure control unit 12, a surrounding environment sensor 13, a front wheel speed sensor 14, a rear wheel speed sensor 15, an inertial measurement unit (IMU) 16, and a control apparatus (ECU) 17. The surrounding environment sensor 13 includes a front surrounding environment sensor 13f and a rear surrounding environment sensor 13r. Note that in the present specification, the straddle-type vehicle 1 is also called a subject vehicle 1.

Fig. 1 shows a state in which a rider 2 on the straddle-type vehicle 1 wears a helmet 3. A display unit 21 is provided to gloves which are an item worn by the rider 2. As shown in Fig. 1, the helmet 3 includes a display unit 31 and a camera 32.

A rider support system 10 that supports driving of the straddle-type vehicle 1 by the rider 2 includes the above-described components (specifically, engine 11, hydraulic pressure control unit 12, surrounding environment sensor 13, front wheel speed sensor 14, rear wheel speed sensor 15, inertial measurement unit 16, control apparatus 17, display unit 21, display unit 31, and camera 32).

The engine 11 is equivalent to one example of a drive source of the straddle-type vehicle 1, and is capable of outputting power for driving a wheel. For example, one or more cylinders in which a combustion chamber(s) is formed, a fuel injection valve that injects fuel to the combustion chamber, and an ignition plug are provided to the engine 11. An air-fuel mixture including air and fuel is formed in the combustion chamber by injection of the fuel from the fuel injection valve, and is ignited by the ignition plug and is combusted. Accordingly, a piston provided in the cylinder reciprocates, thereby rotating a crankshaft. A throttle valve is provided to an intake pipe of the engine 11, and the amount of air sucked into the combustion chamber changes according to a throttle opening degree which is the degree of opening of the throttle valve.

The hydraulic pressure control unit 12 is a unit having a function of controlling the braking force generated on the wheel. For example, the hydraulic pressure control unit 12 includes a component (e.g., control valve and pump) provided on an oil passage connecting a master cylinder and a wheel cylinder to each other for controlling brake hydraulic pressure on the wheel cylinder. The braking force generated on the wheel is controlled in such a manner that operation of the component of the hydraulic pressure control unit 12 is controlled. Note that the hydraulic pressure control unit 12 may control braking force generated on both front and rear wheels or control braking force generated only on one of the front and rear wheels.

The surrounding environment sensor 13 detects surrounding environment information about environment surrounding the straddle-type vehicle 1. The front surrounding environment sensor 13f is provided to a front portion of the straddle-type vehicle 1, and detects surrounding environment information on the front of the straddle-type vehicle 1. The rear surrounding environment sensor 13r is provided to a rear portion of the straddle-type vehicle 1, and detects surrounding environment information on the rear of the straddle-type vehicle 1. The surrounding environment information detected by each surrounding environment sensor 13 is output to the control apparatus 17.

The surrounding environment information detected by the surrounding environment sensor 13 may be information (e.g., relative position, relative distance, relative speed, and relative acceleration) related to a distance or an orientation to a subject positioned at the periphery of the straddle-type vehicle 1, or may be the characteristics (e.g., the type of subject, the shape of the subject itself, and a mark attached to the subject) of the subject positioned at the periphery of the straddle-type vehicle 1. The surrounding environment sensor 13 includes, for example, a radar, a Lidar sensor, an ultrasonic sensor, and a camera.

Note that the surrounding environment information may be detected by surrounding environment sensors mounted on other vehicles or infrastructure equipment. That is, the control apparatus 17 can also acquire the surrounding environment information via wireless communication with the other vehicles or the infrastructure equipment.

The front wheel speed sensor 14 is a wheel speed sensor that detects the wheel speed of the front wheel (e.g., the rotation speed [rpm] of the front wheel per unit time or the movement distance [km/h] of the front wheel per unit time), and outputs a detection result. The front wheel speed sensor 14 may detect other physical amounts which can be substantially converted into the wheel speed of the front wheel. The front wheel speed sensor 14 is provided to the front wheel.

The rear wheel speed sensor 15 is a wheel speed sensor that detects the wheel speed of the rear wheel (e.g., the rotation speed [rpm] of the rear wheel per unit time or the movement distance [km/h] of the rear wheel per unit time), and outputs a detection result. The rear wheel speed sensor 15 may detect other physical amounts which can be substantially converted into the wheel speed of the rear wheel. The rear wheel speed sensor 15 is provided to the rear wheel.

The inertial measurement unit 16 includes a three-axis gyro sensor and a three-direction acceleration sensor, and detects the posture of the straddle-type vehicle 1. The inertial measurement unit 16 is provided, for example, to a trunk of the straddle-type vehicle 1. For example, the inertial measurement unit 16 detects the lean angle of the straddle-type vehicle 1, and outputs a detection result. The inertial measurement unit 16 may detect other physical amounts which can be substantially converted into the lean angle of the straddle-type vehicle 1. The lean angle is equivalent to an angle indicating the inclination of the roll direction of a vehicle body (specifically, trunk) of the straddle-type vehicle 1 with respect to the vertically-upward direction. The inertial measurement unit 16 may include only part of the three-axis gyro sensor and the three-direction acceleration sensor.

The control apparatus 17 controls the rider support system 10. For example, part or the entirety of the control apparatus 17 includes a microcomputer, a microprocessor unit, etc. Alternatively, for example, part or the entirety of the control apparatus 17 may include, e.g., updatable firmware, or may be, e.g., a program module to be executed according to a command from a CPU. The control apparatus 17 may include, for example, one apparatus or a plurality of divided apparatuses.

The display unit 21 has a display function of visually displaying information. The display unit 21 includes, for example, a lamp. Specifically, the display unit 21 includes display elements each provided to the right and left gloves.

The display unit 31 has a display function of visually displaying information within the field of view of the rider 2. The display unit 31 includes, for example, a member provided to a front portion of the helmet 3 and having light permeability, and may be, e.g., an apparatus that projects an image on the member. Such a technique is called head-up display.

The camera 32 is provided to a rear portion of the helmet 3 so as to face rearward. During driving of the straddle-type vehicle 1, the field of view of the camera 32 expands rearward from the camera 32. During driving of the straddle-type vehicle 1, the camera 32 captures a video showing such a field of view. The camera 32 includes, for example, an imaging apparatus such as a complementary metal oxide semiconductor (CMOS) image sensor and an image processing apparatus such as an image signal processor (ISP). Note that the camera 32 that images the rear of the straddle-type vehicle 1 may be mounted on the straddle-type vehicle 1.

Fig. 2 is a block diagram showing one example of a functional configuration of the control apparatus 17. As shown in Fig. 2, the control apparatus 17 includes, for example, an acquisition section 17a and an execution section 17b. Moreover, the control apparatus 17 communicates with each apparatus of the rider support system 10.

The acquisition section 17a acquires information from each apparatus of the rider support system 10. For example, the acquisition section 17a acquires information from the front surrounding environment sensor 13f, the rear surrounding environment sensor 13r, the front wheel speed sensor 14, the rear wheel speed sensor 15, the inertial measurement unit 16, and the camera 32. Note that in the present specification, information acquisition includes, e.g., information extraction or generation. Information generation is implemented by arithmetic processing.

The execution section 17b executes a rider support operation. The rider support operation is an operation for supporting driving by the rider 2, and may include various operations. As described later, the execution section 17b controls, in the rider support operation, the engine 11, the hydraulic pressure control unit 12, the display unit 21, and the display unit 31 as necessary.

Particularly, the execution section 17b executes a first support operation which is a rider support operation for supporting driving by the rider 2 by display on the display unit (in the above-described example, display unit 21 or display unit 31). By such an operation, driving of the straddle-type vehicle 1 by the rider 2 can be properly supported as described later. Details of the first support operation will be described later.

Moreover, the execution section 17b executes a second support operation which is a rider support operation, which is different from the first support operation, based on positional relationship information on the straddle-type vehicle 1 and a target (e.g., other vehicles). The positional relationship information may include, for example, information such as the position, distance, speed, acceleration, or jerk of the straddle-type vehicle 1 relative to the other vehicles or a passage time difference between the straddle-type vehicle 1 and the other vehicles. The positional relationship information may be information on other physical amounts which can be substantially converted into these types of information. The positional relationship information is acquired as the surrounding environment information by the acquisition section 17a. For example, the acquisition section 17a can acquire the positional relationship information based on the output result from the surrounding environment sensor 13. As described later, the second support operation includes, for example, adaptive cruise control. Details of the second support operation will be described later.

### <Operation of Control Apparatus>

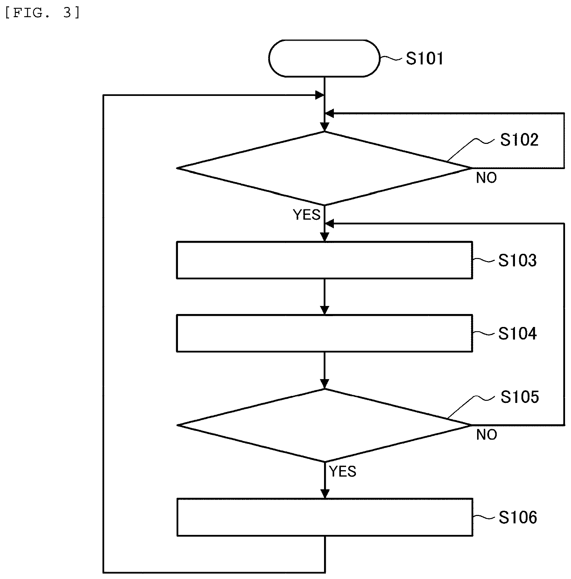

Operation of the control apparatus 17 according to the embodiment of the present invention will be described with reference to Figs. 3 to 13.

As described above, in the control apparatus 17, driving of the straddle-type vehicle 1 by the rider 2 can be properly supported mainly by the first support operation (i.e., rider support operation by display). Hereinafter, as processing examples about the first support operation, first processing, second processing, third processing, and fourth processing will be described in this order.

Fig. 3 is a flowchart showing one example of the flow of the first processing performed by the control apparatus 17. Step S101 in Fig. 3 corresponds to the start of the control flow shown in Fig. 3. In the first processing, Step S104 of the flowchart of Fig. 3 corresponds to the first support operation.

When the control flow shown in Fig. 3 starts, the execution section 17b determines, in Step S102, whether a condition for starting the second support operation (i.e., rider support operation based on the positional relationship information on the straddle-type vehicle 1 and the target (e.g., other vehicles)) has been satisfied. As described later, the start condition in Step S102 may vary according to the type of second support operation.

In a case where it is determined that the condition for starting the second support operation is not satisfied (Step S102/NO), Step S102 is repeated. On the other hand, in a case where it is determined that the condition for starting the second support operation has been satisfied (Step S102/YES), the processing proceeds to Step S103.

In a case where it is determined as YES in Step S102, the execution section 17b executes the second support operation in Step S103.

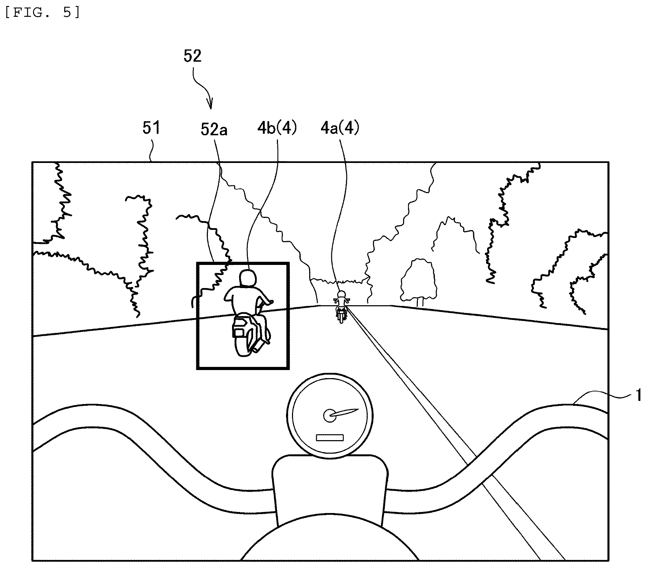

Next, in Step S104, the execution section 17b executes the first support operation. In the first processing of Fig. 3, the execution section 17b causes, in the first support operation, the display unit 31 to display an augmented reality object (see an augmented reality object 52 in Figs. 5 to 10 as described later) within the field of view of the rider 2 based on the surrounding environment information on the straddle-type vehicle 1. An example of the first support operation in the first processing will be described later.

Next, in Step S105, the execution section 17b determines whether a condition for ending the second support operation has been satisfied. As described later, the end condition in Step S105 may vary according to the type of second support operation.

In a case where it is determined that the condition for ending the second support operation is not satisfied (Step S105/NO), the processing returns to Step S103. On the other hand, in a case where it is determined that the condition for ending the second support operation has been satisfied (Step S105/YES), the processing proceeds to Step S106.

In a case where it is determined as YES in Step S105, the execution section 17b ends, in Step S106, the first support operation and the second support operation, and the processing returns to Step S102.

As described above, in the first processing, the execution section 17b causes, in the first support operation, the display unit 31 to display the augmented reality object within the field of view of the rider 2. The augmented reality object is mainly an object about set information in the second support operation. Hereinafter, an example of the second support operation will be described, and thereafter, an example of the first support operation in the first processing will be described.

For example, the second support operation includes an operation of adjusting a positional relationship between the straddle-type vehicle 1 and the other vehicles. The operation of adjusting the positional relationship includes, for example, the adaptive cruise control. Note that the operation of adjusting the positional relationship may be an operation (e.g., operation which is not cancelled even when an accelerator operation by the rider 2 is performed) other than the adaptive cruise control.

A condition for starting the operation of adjusting the positional relationship is, for example, a condition where an operation for starting such an operation is performed by the rider 2. Moreover, a condition for ending the operation of adjusting the positional relationship is, for example, a condition where an operation for ending such an operation is performed by the rider 2.

Hereinafter, the other vehicles targeted for positional relationship adjustment in the operation (e.g., adaptive cruise control) of adjusting the positional relationship will also be referred to as a target vehicle(s). In the adaptive cruise control, a leading vehicle (i.e., vehicle traveling ahead of the straddle-type vehicle 1) is set as the target vehicle. The acquisition section 17a can acquire positional relationship information on the straddle-type vehicle 1 and the leading vehicle, for example, based on the output result from the front surrounding environment sensor 13f.

In the adaptive cruise control, for example, a target inter-vehicular distance which is a target value of an inter-vehicular distance between the straddle-type vehicle 1 and the leading vehicle is set, and the execution section 17b controls the speed of the straddle-type vehicle 1 such that the inter-vehicular distance between the straddle-type vehicle 1 and the leading vehicle is maintained at the target inter-vehicular distance. Note that the inter-vehicular distance may mean a distance in a direction along a traffic lane (specifically, traveling lane for the straddle-type vehicle 1) or may mean a direct distance. For example, the acquisition section 17a acquires, as the surrounding environment information, the inter-vehicular distance between the straddle-type vehicle 1 and the leading vehicle, and the execution section 17b can control the speed of the straddle-type vehicle 1 as described above based on the acquired inter-vehicular distance.

Note that in the adaptive cruise control, a target passage time difference which is a target value of the passage time difference (time taken from a current point until the straddle-type vehicle 1 passes the current position of the leading vehicle) is set, and the execution section 17b may control the speed of the straddle-type vehicle 1 such that the passage time difference is maintained at the target passage time difference. For example, the acquisition section 17a acquires the passage time difference as the surrounding environment information, and the execution section 17b can control the speed of the straddle-type vehicle 1 as described above based on the acquired passage time difference.

In the adaptive cruise control, the execution section 17b automatically controls the speed of the straddle-type vehicle 1 regardless of an acceleration-deceleration operation (i.e., accelerator operation and brake operation) by the rider 2. The execution section 17b controls, for example, operation of the engine 11 and the hydraulic pressure control unit 12 so that the speed of the straddle-type vehicle 1 can be controlled. The execution section 17b can properly control the speed of the straddle-type vehicle 1, for example, based on information on the speed of the straddle-type vehicle 1, which is acquired based on the wheel speed of the front wheel and the wheel speed of the rear wheel. Note that the adaptive cruise control is cancelled when the accelerator operation by the rider 2 is performed.

Moreover, the second support operation includes, for example, an operation of issuing a warning based on the probability of collision. Specifically, the operation of issuing the warning is an operation of warning the rider 2 about a target having the probability of collision with the straddle-type vehicle 1 beyond a reference. The operation of issuing the warning includes, for example, forward collision warning.

A condition for starting the operation of issuing the warning is, for example, a condition where the execution section 17b has determined that the warning needs to be issued. Moreover, a condition for ending the operation of issuing the warning is, for example, a condition where the execution section 17b has determined that the warning no longer needs to be issued or a condition where a predetermined time has elapsed after the start of the warning.

The forward collision warning is an operation of issuing a warning about the presence or approaching of an obstacle such as a vehicle positioned in front of the straddle-type vehicle 1. For example, based on the inter-vehicular distance between the straddle-type vehicle 1 and the leading vehicle and the speed of the straddle-type vehicle 1 relative to the leading vehicle, the execution section 17b determines whether the probability of collision exceeds the reference. Then, in a case where it is determined that the probability of collision exceeds the reference, the execution section 17b warns the rider 2 using an alarming apparatus. The alarming apparatus includes a display apparatus, a sound output apparatus, a vibration generation apparatus, etc. The alarming apparatus may be mounted on the straddle-type vehicle 1, or may be mounted on an item (e.g., helmet 3) worn by the rider 2.

Further, the second support operation includes, for example, an operation about group ride in which a group including a plurality of straddle-type vehicles travels in a plurality of vehicle lines.

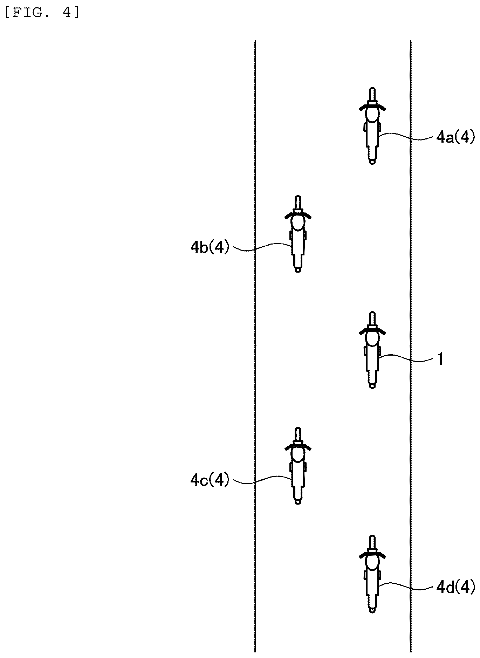

Fig. 4 is a view showing a state in which a group including the straddle-type vehicle 1 is in the middle of the group ride. In the group ride, a group of a plurality of straddle-type vehicles including the subject vehicle 1 travels in a plurality of vehicle lines. Fig. 4 shows the subject vehicle 1 and some vehicles 4a, 4b, 4c, 4d of other vehicles 4 (i.e., straddle-type vehicles other than the subject vehicle 1 in the group) forming the group.

As shown in Fig. 4, in the group ride, the plurality of straddle-type vehicles travels in two right and left vehicle lines on the same lane. In the example of Fig. 4, the vehicle 4b and the vehicle 4c form the left vehicle line. The vehicle 4b and the vehicle 4c are positioned in this order from the front. On the other hand, the vehicle 4a, the subject vehicle 1, and the vehicle 4d form the right vehicle line. The vehicle 4a, the subject vehicle 1, and the vehicle 4d are positioned in this order from the front in the front-rear direction.

Moreover, as shown in Fig. 4, in the group ride, the plurality of straddle-type vehicles travels in such a formation (i.e., zig-zag formation) that the straddle-type vehicles forming the left vehicle line and the straddle-type vehicles forming the right vehicle line are alternately positioned in the front-rear direction. In the example of Fig. 4, the vehicle 4a in the right vehicle line, the vehicle 4b in the left vehicle line, the subject vehicle 1 in the right vehicle line, the vehicle 4c in the left vehicle line, and the vehicle 4d in the right vehicle line are positioned in this order from the front. Note that in the group ride, the plurality of straddle-type vehicles may travel in such a formation (i.e., go-board formation) that the straddle-type vehicles forming the left vehicle line and the straddle-type vehicles forming the right vehicle line travel side by side in the front-rear direction.

As described above, in the group ride of the plurality of straddle-type vehicles, the plurality of straddle-type vehicles travels in the zig-zag formation. Thus, each inter-vehicular distance in the front-rear direction can be shorter as compared to a case where a plurality of straddle-type vehicles travels in line. Consequently, division of the group due to a traffic light can be reduced.

The operation about the group ride is, for example, an operation of adjusting a positional relationship between the subject vehicle 1 and the other vehicles 4 in the group. Such an operation includes, for example, adaptive cruise control in which the other vehicles 4 in the group are set as leading vehicles (i.e., target vehicles) targeted for positional relationship adjustment. For example, in the example of Fig. 4, in a case where the vehicle 4b is set as the target vehicle, the execution section 17b controls, during execution of the adaptive cruise control, the speed of the subject vehicle 1 such that an inter-vehicular distance between the subject vehicle 1 and the vehicle 4b is maintained at the target inter-vehicular distance.

A condition for starting the operation about the group ride may be, for example, a condition where an operation for starting such an operation is performed by the rider 2 or a condition where a state of the plurality of straddle-type vehicles traveling in the above-described formation is automatically recognized based on the surrounding environment information acquired by the straddle-type vehicle 1. Moreover, a condition for ending the operation about the group ride may be, for example, a condition where an operation for ending such an operation is performed by the rider 2 or a condition where a state of the plurality of straddle-type vehicles not traveling in the above-described formation is automatically recognized based on the surrounding environment information acquired by the straddle-type vehicle 1.

Note that the operation about the group ride may be an operation other than the operation of adjusting the positional relationship between the subject vehicle 1 and the other vehicles 4 in the group. For example, the operation about the group ride may be an operation based on positional relationship information on the subject vehicle 1 and other vehicles outside the group. Such an operation may be, for example, an operation of notifying the other vehicles 4 in the group that the other vehicles outside the group have approached the subject vehicle 1.

Hereinafter, an example of the first support operation in the first processing will be described with reference to Figs. 5 to 10. Figs. 5 to 10 are views showing various examples of the augmented reality object 52 displayed within a field of view 51 of the rider 2 in the first processing. As described above, in the first support operation in the first processing, the augmented reality object 52 which is the object about the set information in the second support operation is mainly displayed within the field of view 51 of the rider 2. Note that the augmented reality object 52 is not necessarily the object about the set information in the second support operation.

A technique of displaying the augmented reality object 52 within the field of view 51 is called augmented reality (AR), and for example, is implemented by the display unit 31 of the helmet 3. Note that the display position of the augmented reality object 52 within the field of view 51 is adjusted to a position corresponding to a target (e.g., vehicle 4b in an example of Fig. 5 described later) indicated by the augmented reality object 52. Such adjustment may be performed, for example, based on the target position information obtained by the surrounding environment sensor 13 and the camera (not shown) mounted on the helmet 3 to capture an image of the front of the subject vehicle 1.

Note that an example (i.e., example of the augmented reality object 52 displayed within the field of view 51) of the first support operation executed in a case where the group including the subject vehicle 1 is in the middle of the group ride and the adaptive cruise control in which the other vehicles 4 in the group are set as the target vehicles is executed as the second support operation will be described hereinafter with reference to Figs. 5 to 10.

Note that as described later, the first support operation may be executed in a case where the second support operation is not executed, or the augmented reality object 52 related to the second support operation different in type from the second support operation in progress may be displayed within the field of view 51 in the first support operation.

In the example of Fig. 5, an augmented reality object 52a is displayed within the field of view 51 of the rider 2. The augmented reality object 52a is a rectangular object surrounding the vehicle 4b. Note that the augmented reality object 52a may be in a shape (e.g., circular shape or oval shape) other than the rectangular shape.

For example, the augmented reality object 52a may indicate the target vehicle in the operation of adjusting the positional relationship between the straddle-type vehicle 1 and the other vehicles. In this case, for example, in the example of Fig. 5, the vehicle 4b indicated by the augmented reality object 52a is set as the target vehicle in the adaptive cruise control.

Alternatively, for example, the augmented reality object 52a may indicate the target about which the rider 2 is warned based on the probability of collision. In this case, for example, in the example of Fig. 5, the vehicle 4b indicated by the augmented reality object 52a is set as the leading vehicle which is the target about which the rider 2 is warned by the forward collision warning.

Alternatively, for example, the augmented reality object 52a may indicate vehicles set as the other vehicles 4 in the group. Note that in this case, the augmented reality object 52a may be additionally displayed for the vehicle 4a in addition to the vehicle 4b. Information indicating which vehicles are the other vehicles 4 in the group is included in set information in the operation about the group ride.

Note that in some cases, the other vehicles 4 in the group are hidden behind, e.g., vehicles outside the group and are not visible within the field of view 51. In this case, the execution section 17b may display augmented reality objects 52a for the other vehicles 4 in the group, which are hidden behind, e.g., the vehicles outside the group. For example, via communication between the vehicles in the group, the control apparatus 17 can acquire position information (e.g., information on positions relative to the subject vehicle 1) on the other vehicles 4 in the group, which are hidden behind, e.g., the vehicles outside the group. Thus, the augmented reality objects 52a can be displayed for the other vehicles 4 in the group, which are hidden behind, e.g., the vehicles outside the group.

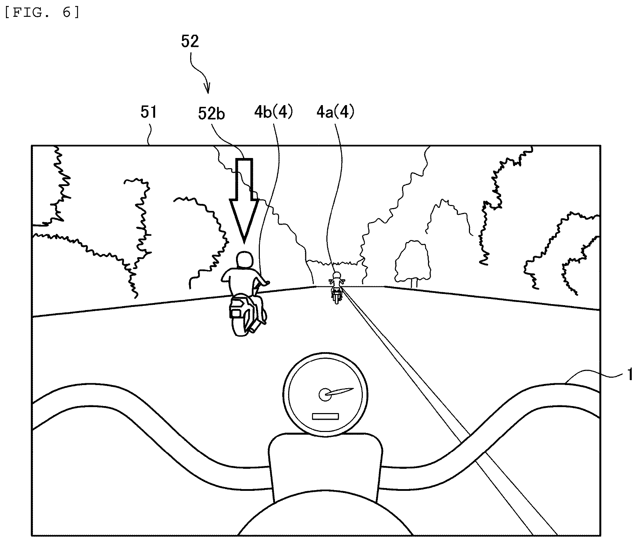

In an example of Fig. 6, an augmented reality object 52b is displayed within the field of view 51 of the rider 2. The augmented reality object 52b is an arrow-shaped object indicating the vehicle 4b. Note that the augmented reality object 52b may be in a shape (e.g., linear shape) other than the arrow shape.

For example, the augmented reality object 52b may indicate, as in the augmented reality object 52a, the target vehicle in the operation of adjusting the positional relationship between the straddle-type vehicle 1 and the other vehicles, may indicate the target about which the rider 2 is warned based on the probability of collision, or may indicate the vehicles set as the other vehicles 4 in the group.

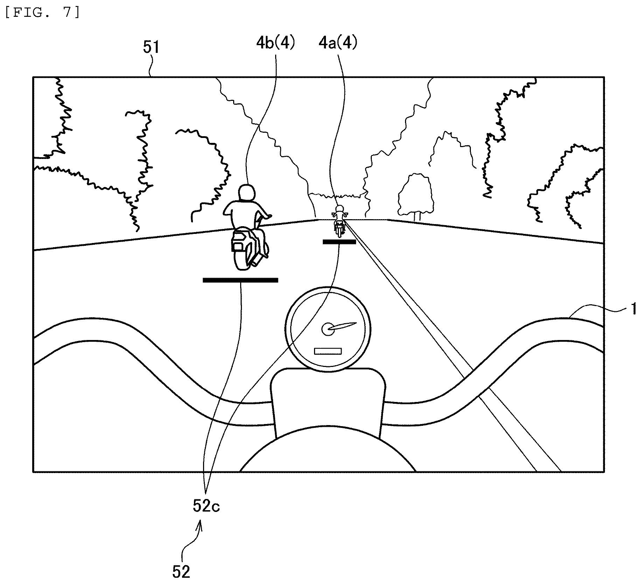

In an example of Fig. 7, augmented reality objects 52c are displayed within the field of view 51 of the rider 2. The augmented reality object 52c is a linear object indicating an approximate position on a road, at which the straddle-type vehicle 1 travels. Note that the augmented reality object 52c may be in a shape (e.g., point or rectangular shape) other than the linear shape.

For example, the augmented reality object 52c may indicate a target positional relationship in the operation of adjusting the positional relationship between the straddle-type vehicle 1 and the other vehicles. The target positional relationship includes, for example, the target inter-vehicular distance or the target passage time difference set in the adaptive cruise control. The augmented reality object 52c displayed in rear of the vehicle 4b in Fig. 7 indicates, for example, the target inter-vehicular distance in a case where the target vehicle in the adaptive cruise control is the vehicle 4b. Moreover, the augmented reality object 52c displayed in rear of the vehicle 4a in Fig. 7 indicates, for example, the target inter-vehicular distance in a case where the target vehicle in the adaptive cruise control is the vehicle 4a. These augmented reality objects 52c are information useful for the rider 2, for example, in a case where the inter-vehicular distance between the subject vehicle 1 and the target vehicle deviates from the target inter-vehicular distance during execution of the adaptive cruise control or while the adaptive cruise control is not executed.

Alternatively, for example, the augmented reality object 52c may indicate a position estimated as a position at which the subject vehicle 1 stops by the adaptive cruise control. For example, in a case where the target vehicle (e.g., vehicle 4a or vehicle 4b) in the adaptive cruise control decelerates, the subject vehicle 1 may also decelerate in association with deceleration of the target vehicle, and as a result, may stop. The position estimated as the position at which the subject vehicle 1 stops by the adaptive cruise control may change according to, e.g., the target inter-vehicular distance. Thus, the augmented reality object 52c is included in an object about set information in the adaptive cruise control.

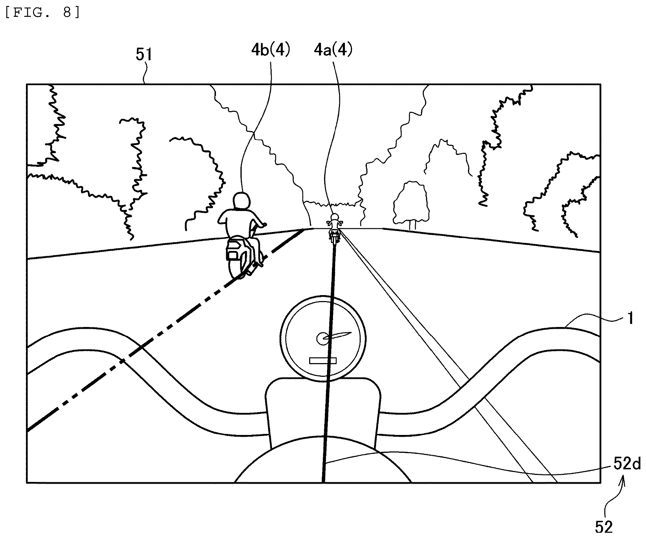

In an example of Fig. 8, an augmented reality object 52d is displayed within the field of view 51 of the rider 2. The augmented reality object 52d is an object indicating a vehicle line on which the target vehicle travels in the operation of adjusting the positional relationship between the straddle-type vehicle 1 and the other vehicles. In the example of Fig. 8, the augmented reality object 52d is displayed at a position indicated by a solid line, and indicates the vehicle line on which the subject vehicle 1 in the group travels. Thus, the target vehicle in the adaptive cruise control is set to the vehicle 4a. The augmented reality object 52d may be in a linear shape or a shape (e.g., oval shape or polygonal shape) other than the linear shape.

Unlike the example of Fig. 8, in a case where the target vehicle in the adaptive cruise control is set to the vehicle 4b, the augmented reality object 52d moves to a position indicated by a chain double-dashed line in Fig. 8. In this case, the augmented reality object 52d indicates the vehicle line on which the subject vehicle 1 in the group does not travel. For example, the target vehicle in the adaptive cruise control is switchable between the vehicle 4a and the vehicle 4b by operation by the rider 2.

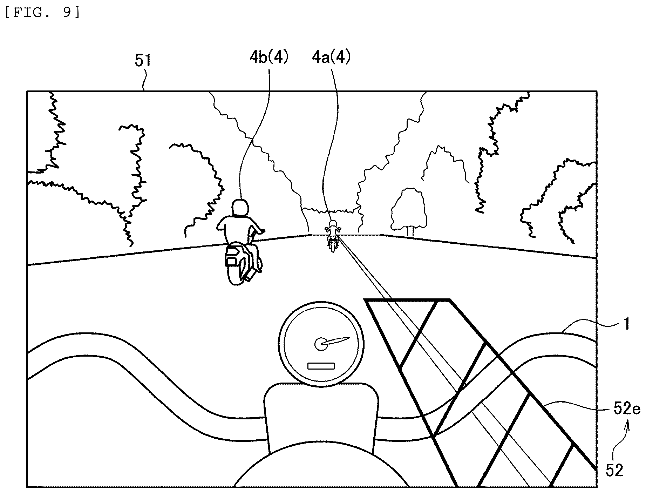

In an example of Fig. 9, an augmented reality object 52e is displayed within the field of view 51 of the rider 2. The augmented reality object 52e is an object indicating a region estimated as a region through which a trailing vehicle (i.e., vehicle traveling behind the straddle-type vehicle 1) will pass. Note that in the example of Fig. 9, the augmented reality object 52e includes not only the outer frame of the region but also hatching within the outer frame, but the hatching may be omitted.

For example, the acquisition section 17a can acquire positional relationship information on the subject vehicle 1 and the trailing vehicle based on the output result from the rear surrounding environment sensor 13r. Then, the execution section 17b can determine, based on the positional relationship information on the subject vehicle 1 and the trailing vehicle, whether the trailing vehicle will move ahead of the subject vehicle 1. In a case where it is determined that the trailing vehicle will move ahead of the subject vehicle 1, the execution section 17b may display the augmented reality object 52e within the field of view 51. Note that the execution section 17b may execute, as the second support operation, an operation of notifying the rider 2 of the trailing vehicle which will move ahead of the subject vehicle 1. In this case, the augmented reality object 52e may be included in an object about set information in such an operation.

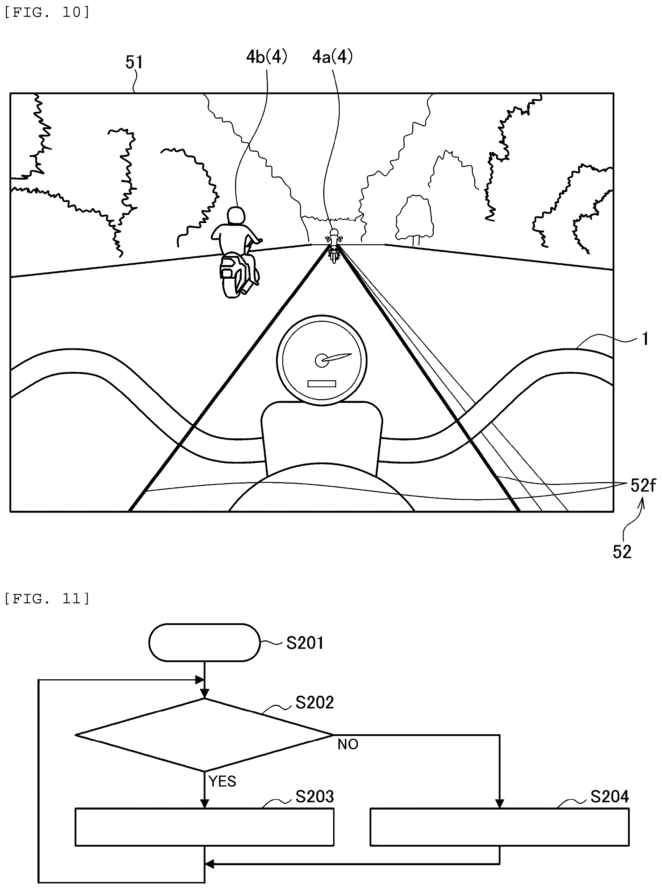

In an example of Fig. 10, augmented reality objects 52f are displayed within the field of view 51 of the rider 2. The augmented reality object 52f is an object indicating a region estimated as a region through which the subject vehicle 1 will pass. In the example of Fig. 10, the augmented reality objects 52f are two linear objects indicating a width (specifically, substantially same width as the width of the subject vehicle 1) corresponding to the width of the subject vehicle 1. The left linear augmented reality object 52f corresponds to a path estimated as a path on which the left end of the subject vehicle 1 will pass, and the right linear augmented reality object 52f corresponds to a path estimated as a path on which the right end of the subject vehicle 1 will pass. Note that the augmented reality object 52f is not limited to the example of Fig. 10, and for example, may be a band-shaped object (e.g., object having a hatched region sandwiched by the two linear objects of Fig. 10) having a width corresponding to the width of the subject vehicle 1. Note that the width between the augmented reality objects 52f may be set considering the width of an item (e.g., case mounted on a rear portion of the subject vehicle 1) mounted on the subject vehicle 1.

Note that the execution section 17b may display the augmented reality objects 52f within the field of view 51 in a case where it is determined that the straddle-type vehicle 1 is in the middle of slip-through ride (so-called lane splitting). The slip-through ride is a state in which the straddle-type vehicle 1 travels on a boundary between two adjacent traveling lanes. For example, in a case where a distance in a lane width direction between the straddle-type vehicle 1 and the lane boundary is shorter than a reference distance, the execution section 17b determines that the straddle-type vehicle 1 is in the middle of the slip-through ride.

As described above, in the first processing, the execution section 17b causes, in the first support operation, the display unit 31 to display the augmented reality object 52 within the field of view 51 of the rider 2 based on the surrounding environment information on the straddle-type vehicle 1. With this configuration, the rider 2 can properly drive the straddle-type vehicle 1 using the information obtained from the augmented reality object 52 displayed within the field of view 51. As described above, according to the first processing, driving of the straddle-type vehicle 1 by the rider 2 can be properly supported.

The examples of the augmented reality object 52 have been described above with reference to Figs. 5 to 10. Note that the augmented reality object 52 is not limited to the above-described examples. For example, the augmented reality object 52 may be an object indicating an obstacle (e.g., hole, rock, or animal) present on a road. For example, the control apparatus 17 can acquire position information on the obstacle present on the road via, e.g., communication with the infrastructure equipment. The execution section 17b can display the augmented reality object 52 indicating such an obstacle within the field of view 51 based on the position information on the obstacle present on the road.

Moreover, one example of the flow of the first processing has been described above with reference to Fig.3. Note that the first processing is not limited to the example of Fig.3. For example, the example has been described above, in which the first support operation (i.e., operation of displaying the augmented reality object 52 within the field of view 51 of the rider 2) is executed during execution of the second support operation (i.e., rider support operation based on the positional relationship information on the straddle-type vehicle 1 and the target). Note that the first support operation may be executed in a case where the second support operation is not executed. Alternatively, the execution section 17b may display, in the first support operation, the augmented reality object 52 related to the second support operation different in type from the second support operation in progress within the field of view 51.

Fig. 11 is a flowchart showing one example of the flow of the second processing performed by the control apparatus 17. Step S201 in Fig. 11 corresponds to the start of the control flow shown in Fig. 11. In the second processing, the entire flowchart of Fig. 11 corresponds to the first support operation.

When the control flow shown in Fig. 11 starts, the execution section 17b determines, in Step S202, whether the surrounding environment information satisfies an execution condition. As described later, in a case where the execution condition is satisfied, a video showing the rear of the straddle-type vehicle 1 is displayed (specifically, video obtained by the camera 32 is displayed on the display unit 31). That is, the execution condition is equivalent to a condition for displaying the video showing the rear of the straddle-type vehicle 1.

For example, the execution condition may be a condition where an inter-vehicular distance between the straddle-type vehicle 1 and the other vehicles 4 in the group in rear of the straddle-type vehicle 1 is longer than a reference distance during the group ride. The acquisition section 17a can acquire, as the surrounding environment information on the rear of the straddle-type vehicle 1, the inter-vehicular distance from the other vehicles 4 in the group in rear of the straddle-type vehicle 1, for example, based on the output result from the rear surrounding environment sensor 13r.

The reference distance is set, for example, to a distance long enough to have a probability of the rider 2 caring the presence of the other vehicles 4 in rear of the straddle-type vehicle 1. In a case where the inter-vehicular distance between the straddle-type vehicle 1 and the other vehicles 4 in the group in rear of the straddle-type vehicle 1 is longer than the reference distance, there is a probability of the rider 2 caring the presence of the other vehicles 4 in rear of the straddle-type vehicle 1. Thus, in this case, the video showing the rear of the straddle-type vehicle 1 is displayed for the rider 2 so that the rider 2 can check the state of the rear of the straddle-type vehicle 1.

Note that based on the speeds or accelerations of the other vehicles 4 in the group in rear of the straddle-type vehicle 1 relative to the straddle-type vehicle 1, the execution section 17b may determine whether there is a probability of the rider 2 caring the presence of the other vehicles 4 in rear of the straddle-type vehicle 1. That is, the execution section 17b may display the video showing the rear of the straddle-type vehicle 1 based on the speeds or accelerations of the other vehicles 4 in the group in rear of the straddle-type vehicle 1 relative to the straddle-type vehicle 1.

Alternatively, for example, the execution condition may be a condition where the positional relationship information on the straddle-type vehicle 1 and the trailing vehicle is information indicating that the absolute value of the speed of the trailing vehicle relative to the straddle-type vehicle 1 is lower than a reference speed. The acquisition section 17a can acquire, as the surrounding environment information on the rear of the straddle-type vehicle 1, the positional relationship information, for example, based on the output result from the rear surrounding environment sensor 13r. The reference speed is, for example, a speed around 0 km/h. In a case where the absolute value of the relative speed is lower than the reference speed, the trailing vehicle travels while maintaining a substantially constant inter-vehicular distance from the straddle-type vehicle 1. In this case, the video showing the rear of the straddle-type vehicle 1 is preferably displayed for the rider 2, considering improvement in safety.

Note that the execution condition may be a condition where the positional relationship information is information indicating not only that the absolute value of the speed of the trailing vehicle relative to the straddle-type vehicle 1 is lower than the reference speed but also that the inter-vehicular distance or passage time difference between the straddle-type vehicle 1 and the trailing vehicle is shorter than a reference value. In a case where the absolute value of the relative speed is lower than the reference speed and the inter-vehicular distance or the passage time difference is shorter than the reference value, the trailing vehicle travels while maintaining a substantially constant inter-vehicular distance from the straddle-type vehicle 1 in a state of having approached the straddle-type vehicle 1 to some extent. This case has a particularly-high need for improvement in the safety by displaying the video showing the rear of the straddle-type vehicle 1 for the rider 2.

In a case where it is determined that the execution condition has been satisfied (Step S202/YES), the processing proceeds to Step S203. In Step S203, the execution section 17b causes the display unit 31 to display the video showing the rear of the straddle-type vehicle 1. Specifically, the execution section 17b causes the display unit 31 to display the video obtained by the camera 32. On the other hand, in a case where it is determined that the execution condition is not satisfied (Step S202/NO), the processing proceeds to Step S204. In Step S204, the execution section 17b causes the display unit 31 to stop displaying the video showing the rear of the straddle-type vehicle 1. After Step S203 or Step S204, the processing returns to Step S202.

As described above, in the second processing, the execution section 17b changes, in the first support operation, the degree of limitation on displaying the video showing the rear of the straddle-type vehicle 1 on the display unit 31 based on the surrounding environment information on the straddle-type vehicle 1. With this configuration, the rider 2 can properly drive the straddle-type vehicle 1 using the information obtained from the video showing the rear of the straddle-type vehicle 1. As described above, according to the second processing, driving of the straddle-type vehicle 1 by the rider 2 can be properly supported.

Note that in the above-described example, execution or stop of display of the video showing the rear of the straddle-type vehicle 1 is equivalent to one example of the change in the degree of limitation on displaying the video showing the rear of the straddle-type vehicle 1. Note that the change in the degree of limitation on displaying the video showing the rear of the straddle-type vehicle 1 may be a change in the perceptibility of the displayed video showing the rear of the straddle-type vehicle 1. For example, in a case where it is determined as NO in Step S202, the perceptibility of the displayed video showing the rear of the straddle-type vehicle 1 may be decreased as compared to a case where it is determined as YES in Step S202 without stopping displaying the video. The decrease in the perceptibility of the displayed video is that the rider 2 is less likely to perceive (i.e., to recognize) the displayed video, and for example, includes narrowing of a display area of the video and a decrease in a display brightness. Note that the perceptibility of the displayed video may be changed by changing the color of the displayed video.

Note that the example where the surrounding environment information on the rear of the straddle-type vehicle 1 is used as the surrounding environment information has been described above. Note that as the surrounding environment information, surrounding environment information (e.g., surrounding environment information on the front or side of the straddle-type vehicle 1) other than the surrounding environment information on the rear of the straddle-type vehicle 1 may be used.

Note that the execution section 17b may change, in the first support operation, the degree of limitation on displaying the video showing the rear of the straddle-type vehicle 1 on the display unit 31 based not only on the surrounding environment information on the straddle-type vehicle 1 but also on behavior information on the straddle-type vehicle 1. The behavior information may include various types of information about the behavior of the straddle-type vehicle 1.

For example, the execution condition in Step S202 may be a condition where the trailing vehicle has been detected and the speed of the straddle-type vehicle 1 is a reference vehicle speed or less. The acquisition section 17a can acquire, as the behavior information on the straddle-type vehicle 1, the speed of the straddle-type vehicle 1, for example, based the output results from the front wheel speed sensor 14 and the rear wheel speed sensor 15. The reference vehicle speed is, for example, a speed around 0 km/h. For example, in a case where the straddle-type vehicle 1 stops, the speed of the straddle-type vehicle 1 is the reference vehicle speed or less. In this case, the video showing the rear of the straddle-type vehicle 1 is preferably displayed for the rider 2 in order to avoid collision of the trailing vehicle with the straddle-type vehicle 1.

Alternatively, for example, the execution condition in Step S202 may be a condition where the trailing vehicle has been detected and the straddle-type vehicle 1 is in the middle of the slip-through ride. The acquisition section 17a can acquire, as the behavior information on the straddle-type vehicle 1, information indicating whether the straddle-type vehicle 1 is in the middle of the slip-through ride, for example, based on traveling position information on the straddle-type vehicle 1 from, e.g., a navigation apparatus. In a case where the trailing vehicle has been detected and the straddle-type vehicle 1 is in the middle of the slip-through ride, the video showing the rear of the straddle-type vehicle 1 is preferably displayed for the rider 2, considering improvement in the safety.

Note that in the flowchart of Fig. 11 as described above, in a case where it is determined as NO in Step S202 after the start of display of the video showing the rear of the straddle-type vehicle 1, such display stops. Note that display may stop with a lapse of a predetermined time after the start of display of the video showing the rear of the straddle-type vehicle 1 as a trigger.

Note that the example where the display unit that displays the video showing the rear of the straddle-type vehicle 1 is the display unit 31 has been described above. The display unit that displays such a video may be a display unit other than the display unit 31. For example, the display unit that displays the video may be a display unit mounted on the straddle-type vehicle 1.

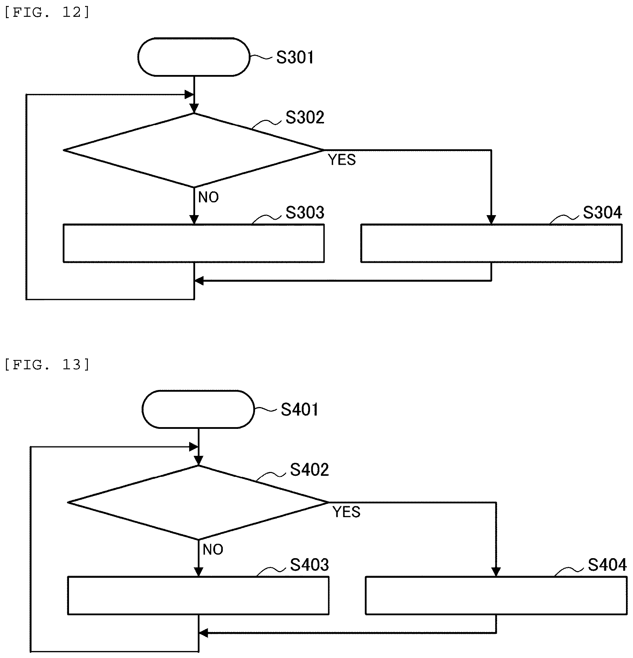

Fig. 12 is a flowchart showing one example of the flow of the third processing performed by the control apparatus 17. Step S301 in Fig. 12 corresponds to the start of the control flow shown in Fig. 12. In the third processing, the entire flowchart of Fig. 12 corresponds to the first support operation.

When the control flow shown in Fig. 12 starts, the execution section 17b determines, in Step S302, whether the straddle-type vehicle 1 is in the middle of cornering.

For example, the execution section 17b determines, based on the lean angle of the straddle-type vehicle 1, whether the straddle-type vehicle 1 is in the middle of cornering. The lean angle of the straddle-type vehicle 1 can be acquired, for example, based on the detection result from the inertial measurement unit 16. For example, in a case where the lean angle of the straddle-type vehicle 1 is greater than a reference value, the execution section 17b determines that the straddle-type vehicle 1 is in the middle of cornering.

The example where determination in Step S302 is made based on the lean angle of the straddle-type vehicle 1 has been described above. Note that determination in Step S302 may be performed based on information other than the lean angle of the straddle-type vehicle 1. For example, the execution section 17b may determine, based on information (e.g., information on a lateral acceleration, information on a yaw angular velocity, and information on a steering angle) about the posture of the straddle-type vehicle 1 other than the lean angle, whether the straddle-type vehicle 1 is in the middle of cornering. Alternatively, for example, the execution section 17b may determine, based on information (e.g., map information acquired from the navigation apparatus) other than the information about the posture of the straddle-type vehicle 1, whether the straddle-type vehicle 1 is in the middle of cornering.

As described later, in the flowchart of Fig. 12, display on the display unit 31 is executed in a case where the straddle-type vehicle 1 is not in the middle of cornering, and is stopped in a case where the straddle-type vehicle 1 is in the middle of cornering. An example of contents displayed on the display unit 31 will be described herein. The contents displayed on the display unit 31 are not limited to the following examples, and may be display contents other than the following examples.

For example, the contents displayed on the display unit 31 may be the set information in the adaptive cruise control. Such set information includes, for example, the target inter-vehicular distance, the target passage time difference, and the target vehicle. Alternatively, for example, the contents displayed on the display unit 31 may be the warning based on the probability of collision. Alternatively, for example, the contents displayed on the display unit 31 may be the video showing the rear of the straddle-type vehicle 1. Alternatively, for example, the contents displayed on the display unit 31 may be the behavior information on the straddle-type vehicle 1. The behavior information includes, for example, the speed and lean angle of the straddle-type vehicle 1.

In a case where it is determined that the straddle-type vehicle 1 is not in the middle of cornering (Step S302/NO), the processing proceeds to Step S303. In Step S303, the execution section 17b executes display on the display unit 31. On the other hand, in a case where it is determined that the straddle-type vehicle 1 is in the middle of cornering (Step S302/YES), the processing proceeds to Step S304. In Step S304, the execution section 17b stops display on the display unit 31. After Step S303 or Step S304, the processing returns to Step S302.

As described above, in the third processing, the execution section 17b changes, in the first support operation, the indication displayed on the display unit 31 according to whether the straddle-type vehicle 1 is in the middle of cornering. Specifically, in a case where the straddle-type vehicle 1 is in the middle of cornering, the execution section 17b limits, in the first support operation, the indication displayed on the display unit 31 as compared to a case where the straddle-type vehicle 1 is not in the middle of cornering. With this configuration, the rider 2 can concentrate on driving without being distracted by the indication displayed on the display unit 31 in a case where the straddle-type vehicle 1 is in the middle of cornering. As described above, according to the third processing, driving of the straddle-type vehicle 1 by the rider 2 can be properly supported.

Note that in the above-described example, stop of display on the display unit 31 is equivalent to one example of limitation on display on the display unit 31. Note that limitation on display on the display unit 31 may be a decrease in the perceptibility of the indication displayed on the display unit 31. For example, in a case where it is determined as YES in Step S302, the perceptibility of the indication displayed on the display unit 31 may be decreased as compared to a case where it is determined as NO in Step S302 without display on the display unit 31 being stopped. The decrease in the perceptibility of the displayed indication is that the rider 2 is less likely to perceive (i.e., recognize) the displayed indication, and for example, includes narrowing of a display area of the displayed indication and a decrease in a display brightness. Note that the perceptibility of the displayed indication may be changed by changing the color of the displayed indication.

Note that the example where the display unit target for limitation on display according to whether the straddle-type vehicle 1 is in the middle of cornering is the display unit 31 has been described above. Note that the display unit targeted for limitation on display may be a display unit other than the display unit 31. For example, in a case where the straddle-type vehicle 1 is in the middle of cornering, the execution section 17b may limit, in the first support operation, display on the display unit 21 as compared to a case where the straddle-type vehicle 1 is not in the middle of cornering, or may limit display on a display unit (e.g., display unit mounted on the straddle-type vehicle 1) other than the display units 21, 31.

Fig. 13 is a flowchart showing one example of the flow of the fourth processing performed by the control apparatus 17. Step S401 in Fig. 13 corresponds to the start of the control flow shown in Fig. 13. In the fourth processing, the entire flowchart of Fig. 13 corresponds to the first support operation.

When the control flow shown in Fig. 13 starts, the execution section 17b determines, in Step S402, whether the straddle-type vehicle 1 is in the middle of cornering. The processing in Step S402 is similar to the processing in Step S302 in Fig. 12 as described above.

As described later, in the flowchart of Fig. 13, in a case where the straddle-type vehicle 1 is in the middle of cornering, the position of the indication displayed on the display unit 21 changes as compared to a case where the straddle-type vehicle 1 is not in the middle of cornering. An example of contents displayed on the display unit 21 will be described herein. Note that the contents displayed on the display unit 21 are not limited to the following examples and may be display contents other than the following examples.

For example, display on the display unit 21 is display for notifying the rider 2 of approaching of the trailing vehicle toward the straddle-type vehicle 1 or the presence of the trailing vehicle. For example, the execution section 17b can acquire the positional relationship information on the straddle-type vehicle 1 and the trailing vehicle based on the output result from the rear surrounding environment sensor 13r. Then, the execution section 17b can determine, based on the positional relationship information on the subject vehicle 1 and the trailing vehicle, whether the trailing vehicle is approaching the straddle-type vehicle 1 and whether the trailing vehicle is present. In a case where it is determined that the trailing vehicle is approaching the straddle-type vehicle 1 or the trailing vehicle is present, the execution section 17b lights up or blinks the display unit 21, for example.

In a case where it is determined that the straddle-type vehicle 1 is not in the middle of cornering (Step S402/NO), the processing proceeds to Step S403. In Step S403, the execution section 17b sets the position of the indication displayed on the display unit 21 to a reference position. As described above, the display unit 21 includes the display elements each provided to the right and left gloves. The reference position is, for example, a position including both the right and left display elements. In this case, when the straddle-type vehicle 1 is not in the middle of cornering, the indication is displayed on both the display unit 21 provided to the left glove and the display unit 21 provided to the right glove.

On the other hand, in a case where it is determined that the straddle-type vehicle 1 is in the middle of cornering (Step S402/YES), the processing proceeds to Step S404. In Step S404, the execution section 17b changes the position of the indication displayed on the display unit 21 with respect to the reference position. For example, the execution section 17b positions the indication displayed on the display unit 21 to a side in a turning direction with reference to the center position of the straddle-type vehicle 1 in the vehicle width direction. In this case, when the straddle-type vehicle 1 is in the middle of leftward cornering, the indication is displayed only on the display unit 21 provided to the left glove. When the straddle-type vehicle 1 is in the middle of rightward cornering, the indication is displayed only on the display unit 21 provided to the right glove.

After Step S403 or Step S404, the processing returns to Step S402.

As described above, in the fourth processing, the execution section 17b changes, in the first support operation, the indication displayed on the display unit 21 according to whether the straddle-type vehicle 1 is in the middle of cornering. Specifically, in a case where the straddle-type vehicle 1 is in the middle of cornering, the execution section 17b changes, in the first support operation, the position of the indication displayed on the display unit 21 as compared to a case where the straddle-type vehicle 1 is not in the middle of cornering. With this configuration, in a case where the straddle-type vehicle 1 is in the middle of cornering, the position of the indication displayed on the display unit 21 can be changed according to a direction in which the face of the rider 2 faces. Thus, the rider 2 can easily recognize the indication displayed on the display unit 21 during cornering of the straddle-type vehicle 1. As described above, according to the fourth processing, driving of the straddle-type vehicle 1 by the rider 2 can be properly supported.

Note that the example where the display unit targeted for the change in the display position according to whether the straddle-type vehicle 1 is in the middle of cornering is the display unit 21 has been described above. Note that the display unit targeted for the change in the display position may be a display unit other than the display unit 21.

For example, in a case where the straddle-type vehicle 1 is in the middle of cornering, the execution section 17b may change, in the first support operation, the position of the indication displayed on the display unit 31 as compared to a case where the straddle-type vehicle 1 is not in the middle of cornering, or may change the position of the indication displayed on a display unit (e.g., display unit mounted on the straddle-type vehicle 1) other than the display units 21, 31.

For example, the display unit 21 is the display unit provided to the item (i.e., gloves) worn by the hands which are the parts of the rider 2 other than the head, but the display unit targeted for the change in the display position may be a display unit provided to an item worn by a part of the rider 2 other than the hands among the parts other than the head. Alternatively, for example, the display unit 21 is the display unit provided to the item worn by the parts of the rider 2 other than the head, but the display unit targeted for the change in the display position may be a display unit that projects an image on a worn item or the skin of the rider 2.

### <Effects of Control Apparatus>

The effects of the control apparatus 17 according to the embodiment of the present invention will be described.

The control apparatus 17 includes the execution section 17b that executes the rider support operation for supporting driving by the rider 2, and the execution section 17b executes the first support operation which is the rider support operation for supporting driving by the rider 2 by display on the display unit (e.g., display unit 21 or display unit 31). With this configuration, the information can be properly provided to the rider 2. Thus, driving of the straddle-type vehicle 1 by the rider 2 can be properly supported.

Preferably, in the control apparatus 17, the execution section 17b causes, in the first support operation, the display unit (e.g., display unit 31) to display the augmented reality object 52 within the field of view 51 of the rider 2 based on the surrounding environment information on the straddle-type vehicle 1. With this configuration, the rider 2 can properly drive the straddle-type vehicle 1 using the information obtained from the augmented reality object 52 displayed within the field of view 51. Thus, driving of the straddle-type vehicle 1 by the rider 2 can be more properly supported.

Preferably, in the control apparatus 17, the surrounding environment information is the positional relationship information on the straddle-type vehicle 1 and the target, the execution section 17b executes the second support operation which is the rider support operation different from the first support operation based on the positional relationship information, and the augmented reality object 52 is the object about the set information in the second support operation. With this configuration, the rider 2 can properly utilize the second support operation using the information obtained from the augmented reality object 52 displayed within the field of view 51.

Preferably, in the control apparatus 17, the second support operation includes the operation of adjusting the positional relationship between the straddle-type vehicle 1 and the other vehicles (e.g., other vehicles 4). The augmented reality object 52 about the set information in such an operation is displayed within the field of view 51 so that the rider 2 can properly utilize such an operation.

Preferably, in the control apparatus 17, the second support operation includes the operation of issuing the warning based on the probability of collision. The augmented reality object 52 about the set information in such an operation is displayed within the field of view 51 so that the rider 2 can properly utilize such an operation.

Preferably, in the control apparatus 17, the second support operation includes the operation about the group ride in which the group including the plurality of straddle-type vehicles travels in the plurality of vehicle lines. The augmented reality object 52 about the set information in such an operation is displayed within the field of view 51 so that the rider 2 can properly utilize such an operation.

Preferably, in the control apparatus 17, the execution section 17b changes, in the first support operation, the degree of limitation on displaying the video showing the rear of the straddle-type vehicle 1 on the display unit (e.g., display unit 31) based on the surrounding environment information on the straddle-type vehicle 1. With this configuration, the rider 2 can properly drive the straddle-type vehicle 1 using the information obtained from the video showing the rear of the straddle-type vehicle 1. Thus, driving of the straddle-type vehicle 1 by the rider 2 can be more properly supported.

Preferably, in the control apparatus 17, the surrounding environment information is the surrounding environment information on the rear of the straddle-type vehicle 1. With this configuration, the degree of limitation on displaying the video showing the rear of the straddle-type vehicle 1 can be properly changed according to a situation in rear of the straddle-type vehicle 1.

Preferably, in the control apparatus 17, the execution section 17b further changes, in the first support operation, the degree of limitation based on the behavior information on the straddle-type vehicle 1. With this configuration, the degree of limitation on displaying the video showing the rear of the straddle-type vehicle 1 can be properly changed considering the behavior information on the straddle-type vehicle 1.

Preferably, in the control apparatus 17, the execution section 17b changes, in the first support operation, the indication displayed on the display unit (e.g., display unit 21 or display unit 31) according to whether the straddle-type vehicle 1 is in the middle of cornering. With this configuration, the rider 2 can optimize the indication displayed on the display unit in a case where the straddle-type vehicle 1 is in the middle of cornering. Thus, driving of the straddle-type vehicle 1 by the rider 2 can be more properly supported.

Preferably, in the control apparatus 17, the execution section 17b limits, in the first support operation, display on the display unit (e.g., display unit 21 or display unit 31) as compared to a case where the straddle-type vehicle 1 is not in the middle of cornering in a case where the straddle-type vehicle 1 is in the middle of cornering. With this configuration, in a case where the straddle-type vehicle 1 is in the middle of cornering, the rider 2 can concentrate on driving without being distracted by the indication displayed on the display unit. Thus, driving of the straddle-type vehicle 1 by the rider 2 can be more properly supported.

Preferably, in the control apparatus 17, the execution section 17b changes, in the first support operation, the position of the indication displayed on the display unit (e.g., display unit 21 or display unit 31) as compared to a case where the straddle-type vehicle 1 is not in the middle of cornering in a case where the straddle-type vehicle 1 is in the middle of cornering. With this configuration, in a case where the straddle-type vehicle 1 is in the middle of cornering, the position of the indication displayed on the display unit can be changed according to the direction in which the face of the rider 2 faces. Thus, the rider 2 easily recognizes the indication displayed on the display unit during cornering of the straddle-type vehicle 1. Consequently, driving of the straddle-type vehicle 1 by the rider 2 can be more properly supported.

Preferably, in the control apparatus 17, the execution section 17b positions, in the first support operation, the indication displayed on the display unit (e.g., display unit 21 or display unit 31) to the side in the turning direction with reference to the center position of the straddle-type vehicle 1 in the vehicle width direction in a case where the straddle-type vehicle 1 is in the middle of cornering. With this configuration, in a case where the straddle-type vehicle 1 is in the middle of cornering, the position of the indication displayed on the display unit can be properly changed according to the direction in which the face of the rider 2 faces. Thus, the rider 2 can easily and properly recognize the indication displayed on the display unit during cornering of the straddle-type vehicle 1.

Preferably, in the control apparatus 17, the display unit (e.g., display unit 21) is provided to the item worn by the part of the rider 2 other than the head, or projects the image on the worn item or the skin of the rider 2. With this configuration, in the straddle-type vehicle 1 having a limitation on an apparatus mounting space, a display region can be expanded and the rider 2 can easily recognize the indication displayed on the display unit, for example, as compared to a case of using the display unit mounted on the straddle-type vehicle 1.

The present invention is not limited to description of the embodiment. For example, only part of the embodiment may be implemented.

Note that the first processing, the second processing, the third processing, and the fourth processing have been described above as the processing examples about the first support operation. All these types of processing may be performed, or only arbitrary one(s) of these types of processing may be performed.

### Reference Signs List

1: Straddle-type vehicle
2: Rider
3: Helmet
4: Other vehicles
4a: Vehicle
4b: Vehicle
4c: Vehicle
4d: Vehicle
10: Rider support system
11: Engine
12: Hydraulic pressure control unit
13: Surrounding environment sensor
13f: Front surrounding environment sensor
13r: Rear surrounding environment sensor
14: Front wheel speed sensor
15: Rear wheel speed sensor
16: Inertial measurement unit
17: Control apparatus
17a: Acquisition section
17b: Execution section
21: Display section
31: Display section
32: Camera
51: Field of view
52: Augmented reality object
52a: Augmented reality object
52b: Augmented reality object
52c: Augmented reality object
52d: Augmented reality object
52e: Augmented reality object
52f: Augmented reality object

## Claims

1. A control apparatus (17) for a rider support system (10) for supporting driving of a straddle-type vehicle (1) by a rider (2), comprising:
an execution section (17b) that executes a rider support operation for supporting the driving by the rider (2),
wherein the execution section (17b) executes a first support operation which is the rider support operation for supporting the driving by the rider (2) by display on a display unit (21, 31).

2. The control apparatus according to claim 1, wherein
the execution section (17b) causes, in the first support operation, the display unit (31) to display an augmented reality object (52) within a field of view (51) of the rider (2) based on surrounding environment information on the straddle-type vehicle (1).

3. The control apparatus according to claim 2, wherein
the surrounding environment information is positional relationship information on the straddle-type vehicle (1) and a target,
the execution section (17b) executes, based on the positional relationship information, a second support operation which is the rider support operation different from the first support operation, and
the augmented reality object (52) is an object about set information in the second support operation.

4. The control apparatus according to claim 3, wherein
the second support operation includes an operation of adjusting a positional relationship between the straddle-type vehicle (1) and other vehicle (4).

5. The control apparatus according to claim 3, wherein
the second support operation includes an operation of issuing a warning based on a probability of collision.

6. The control apparatus according to any one of claims 3 to 5, wherein
the second support operation includes an operation about group ride in which a group including a plurality of straddle-type vehicles travels in a plurality of vehicle lines.

7. The control apparatus according to claim 1, wherein
the execution section (17b) changes, in the first support operation, a degree of limitation on displaying a video showing a rear of the straddle-type vehicle (1) on the display unit (31) based on surrounding environment information on the straddle-type vehicle (1).

8. The control apparatus according to claim 7, wherein
the surrounding environment information is surrounding environment information on the rear of the straddle-type vehicle (1).

9. The control apparatus according to claim 7 or 8, wherein
the execution section (17b) further changes, in the first support operation, the degree of limitation based on behavior information on the straddle-type vehicle (1).

10. The control apparatus according to claim 1, wherein
the execution section (17b) changes, in the first support operation, an indication displayed on the display unit (21, 31) according to whether the straddle-type vehicle (1) is in a middle of cornering.

11. The control apparatus according to claim 10, wherein
in a case where the straddle-type vehicle (1) is in the middle of cornering, the execution section (17b) limits, in the first support operation, the display on the display unit (21, 31) as compared to a case where the straddle-type vehicle (1) is not in the middle of cornering.

12. The control apparatus according to claim 10 or 11, wherein
in a case where the straddle-type vehicle (1) is in the middle of cornering, the execution section (17b) changes, in the first support operation, a position of the indication displayed on the display unit (21, 31) as compared to a case where the straddle-type vehicle (1) is not in the middle of cornering.

13. The control apparatus according to claim 12, wherein
in a case where the straddle-type vehicle (1) is in the middle of cornering, the execution section (17b) positions, in the first support operation, the indication displayed on the display unit (21, 31) to a side in a turning direction with reference to a center position of the straddle-type vehicle (1) in a vehicle width direction.

14. The control apparatus according to claim 1, wherein
the display unit (21) is provided to an item worn by a part of the rider (2) other than a head, or projects an image on the item or a skin of the rider (2).

15. A control method for a rider support system (10) for supporting driving of a straddle-type vehicle (1) by a rider (2), comprising:
an execution section (17b) of a control apparatus (17) executing a rider support operation for supporting the driving by the rider (2),
wherein the execution section (17b) executes a first support operation which is the rider support operation for supporting the driving by the rider (2) by display on a display unit (21, 31).
